Europäisches Patentamt

(19) European Patent Office

Office européen des brevets

(11) Numéro de publication: **0 256 949**
**A1**

(12) **DEMANDE DE BREVET EUROPEEN**

(21) Numéro de dépôt: 87401874.0

(22) Date de dépôt: 12.08.87

(51) Int. Cl.⁴: **F 16 L 55/12**

(30) Priorité: 14.08.86 FR 8611758

(43) Date de publication de la demande:
24.02.88 Bulletin 88/08

(84) Etats contractants désignés:
AT BE CH DE ES GB GR IT LI LU NL SE

(71) Demandeur: **Pronal**
**139, rue des Arts B.P.25**
**F-59051 Roubaix Cédex 1 (FR)**

(72) Inventeur: **Fauquant, Roland 3 Résidence "Le Clos du**
**Parc"**
**Rue du Général Leclerc**
**F-59510 Hem (FR)**

**Lemahieu, Marc 512 Résidence de la Planche Epinoy**
**Avenue de Flandre**
**F-59510 Croix (FR)**

(74) Mandataire: **Moncheny, Michel et al**
**c/o Cabinet Lavoix 2 Place d'Estienne d'Orves**
**F-75441 Paris Cedex 09 (FR)**

(54) **Dispositif destiné à obturer une canalisation de transport de fluide.**

(57) L'invention a pour objet un dispositif destiné à obturer une canalisation de transport de fluide du type dilatable, comportant une enceinte gonflable cylindrique (33), un tube de by-pass (14) traversant cette enceinte cylindrique (33) pour permettre le passage contrôlé du fluide, ce tube (14) étant solidaire d'une première extrémité de l'enceinte cylindrique (33) et coulissant à travers la seconde extrémité de l'enceinte cylindrique (33), ainsi que des moyens assurant l'étanchéité entre ledit tube (14) et ladite seconde extrémité de l'enceinte cylindrique (33), caractérisé en ce que lesdits moyens comprennent un joint à lèvres (25) entourant ledit tube (14) et disposé sur un support de révolution (23) solidaire de la seconde extrémité de l'enceinte cylindrique (33).

**EP 0 256 949 A1**

**Description**

Dispositif destiné à obturer une canalisation de transport de fluide

La présente invention concerne un dispositif destiné à obturer une canalisation de transport de fluide, liquide ou gaz.

Des obturateurs sont utilisés de façon classique pour obturer diverses canalisations, notamment dans le cas de rupture de canalisation ou d'opérations d'entretien ou de réparation.

On connaît à cet effet des obturateurs dits dilatables comprenant une enceinte gonflable, dont le diamètre peut être adapté au diamètre de la canalisation et qui peuvent donc être utilisés pour une certaine gamme de diamètre de canalisations.

On a cherché à développer des obturateurs présentant un tube dit de by-pass c'est à dire un tube traversant l'enceinte gonflable pour permettre le passage contrôlé du fluide.

On se heurte toutefois à un problème d'étanchéité entre l'enceinte et le tube, car plus l'enceinte est gonflée, c'est à dire plus son diamètre augmente, et plus sa longueur tend à diminuer.

La présente invention vise à résoudre ce problème.

A cet effet la présente invention a pour objet un dispositif destiné à obturer une canalisation de transport de fluide, du type dilatable comportant une enceinte gonflable cylindrique, un tube de by-pass traversant cette enceinte cylindrique pour permettre le passage contrôlé du fluide, ce tube étant solidaire d'une première extrémité de l'enceinte cylindrique et coulissant à travers la seconde extrémité de l'enceinte cylindrique, ainsi que des moyens assurant l'étanchéité entre ledit tube et ladite seconde extrémité de l'enceinte cylindrique, caractérisé en ce que lesdits moyens comprennent un joint à lèvres entourant ledit tube disposé sur un support de révolution solidaire de la seconde extrémité de l'enceinte cylindrique.

Le support cylindrique du joint à lèvres comprend de préférence une partie tronçonique dont la partie étroite dirigée vers ladite première extrémité de l'enceinte cylindrique porte le joint à lèvres et dont la partie large est munie d'une collerette fixée à ladite seconde extrémité de l'enceinte cylindrique.

L'invention est exposée ci-après plus en détail en se référant au dessin annexé sur lequel la Fig. unique est une vue en coupe d'un dispositif selon l'invention.

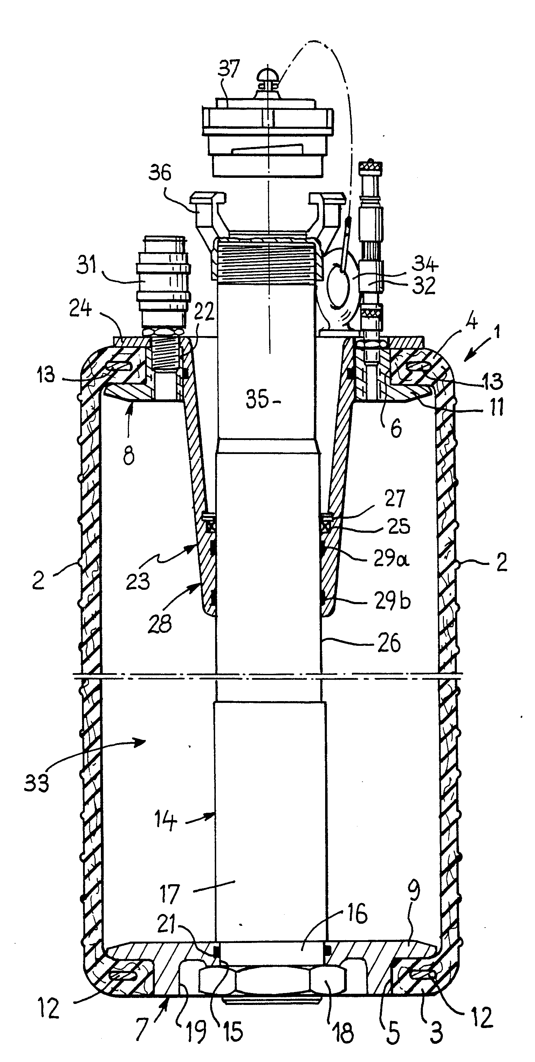

Le dispositif représenté sur la Fig. 1 comprend une enveloppe cylindrique 1 réalisée en caoutchouc, par exemple en copolymère butadiène-acrylonitrile, en copolymère butadiène-styrène ou en caoutchouc Hydrine, comportant une armature de tissu, par exemple en polyamide-6,6, et munie sur sa surface cylindrique externe de nervures annulaires 2.

L'enveloppe cylindrique 1 comprend des extrémités 3 et 4 recourbées vers l'intérieur se terminant par un bord cylindrique respectivement 5 et 6 parallèle à l'axe de l'enveloppe. Sur ces extrémités sont fixées des plateaux rigides d'extrémité, respectivement 7 et 8, par exemple en aluminium, dont la forme périphérique épouse la forme intérieure des extrémités 3 et 4, et présente des collerettes internes, respectivement 9 et 11 sur lesquelles s'appliquent les parois internes des extrémités 3 et 4.

Des anneaux de blocage par exemple en aluminium, respectivement 12 et 13, sont noyés dans les extrémités 3 et 4 en regard des collerettes 9 et 11.

L'enveloppe cylindrique 1 est vulcanisée après fixation des plateaux rigides 7 et 8, ce qui permet une adhérisation du caoutchouc sur les plateaux.

Le plateau d'extrémité 7 constitue le plateau sur lequel est fixé le tube de by-pass 14. Le plateau 7 comporte à cet effet un perçage central 15 dans lequel est insérée l'extrémité 16 du tube de by-pass 14. La zone 17 du tube de by-pass qui est adjacente à la zone d'extrémité 16 a un diamètre supérieur à celui de la zone d'extrémité 16 et forme ainsi une butée vis-à-vis du plateau 7. Le serrage de l'extrémité 16 sur le plateau 7 est assuré par un écrou 18 coopérant avec un filetage correspondant de l'extrémité 16 et qui est logé dans un évidement 19 du plateau 7. Un joint torique 21 fixé dans une gorge annulaire ménagée dans le perçage 15 assure l'étanchéité.

L'autre plateau d'extrémité, 8, est le plateau qui est mobile par rapport au tube de by-pass 14. Sur ce plateau 8 qui comprend un perçage cylindrique 22 est fixé un support 23 essentiellement en forme de tronc de cône. La partie large du support 23 s'appuie sur le perçage cylindrique 22 et présente une collerette 24 fixée sur l'extérieur du plateau 8 et recouvrant en partie l'extrémité 3 de l'enveloppe 1. La partie étroite du support 23 disposée à l'intérieur de l'enveloppe 1 porte un joint 25 comportant une lèvre de raclage en contact avec une zone 26 du tube de by-pass d'un diamètre légèrement inférieur à celui de la zone 17. Le joint 25 est maintenu en place par un dispositif de clipsage 27.

L'extrémité étroite du support 23 se prolonge au-delà du joint à lèvres 25 par une extrémité 28 portant deux bagues 29a et 29b en Hostaform disposées dans des gorges annulaires, de façon à former un gui dage long autolubrifié par les deux bagues 29a et 29b.

La collerette 24 est fixée sur le plateau 8 par un système de boulons (n'apparaîssant pas sur la Fig.).

L'étanchéité entre le support 23 et le plateau 8 est réalisée grâce à un joint torique 31 logé dans une gorge annulaire ménagée dans le perçage 22.

Par ailleurs, sur le plateau 8 sont fixées des tubulures 31 et 32 qui le traversent, permettant la connexion de l'enceinte 33 ainsi formée à plusieurs sources d'alimentation en air comprimé.

Sur le plateau 8 est également fixé un anneau de levage 34.

Le tube de by-pass 14 se termine au niveau du plateau 8 par une zone terminale 35 de plus faible diamètre que la zone 26.

L'extrémité de la zone 35 est filetée et porte un demi raccord symétrique 36 sur lequel peut être branché un système de contrôle de passage des fluides ou un bouchon 37 relié par une chaîne à l'anneau 34.

Lorsque le dispositif selon l'invention est mis en place et progressivement gonflé, les plateaux d'extrémité 7 et 8 tendent à se rapprocher et le support tronçonique 23 de déplacer sur la zone 26 du tube by-pass 14.

La présence de la lèvre de râclage 25 et la forme du support 23 permet de garantir un refoulement sans colmatage et un nettoyage permanent de la zone 26.

## Revendications

1. Dispositif destiné à obturer une canalisation de transport de fluide, du type dilatable, comportant une enceinte gonflable cylindrique (33), un tube de by-pass (14) traversant cette enceinte cylindrique (33) pour permettre le passage contrôlé du fluide, ce tube (14) étant solidaire d'une première extrémité de l'enceinte cylindrique (33) et coulissant à travers la seconde extrémité de l'enceinte cylindrique (33), ainsi que des moyens assurant l'étanchéité entre ledit tube (14) et ladit seconde extrémité de l'enceinte cylindrique (33), charactérisé en ce que lesdits moyens comprennent un joint à lèvres (25) entourant ledit tube (14) et disposé sur un support de révolution (23) solidaire de la seconde extrémité de l'enceinte (33).

2. Dispositif selon la revendication 1, caractérisé en ce que ledit support (33) comprend une partie tronçonique dont la partie étroite dirigée vers ladite première extrémité de l'enceinte cylindrique (33) porte le joint à lèvres (25) et dont la partie large est munie d'une collerette (24) fixée à ladite seconde extrémité de l'enceinte cylindrique (33).

3. Dispositif selon la revendication 2, caractérisé en ce que ledit support comprend dans sa partie étroite une extrémité (28) formant un guidage long.

4. Dispositif selon la revendication 3, caractérisé en ce que ledit guidage long est autolubrifié par des bagues de lubrification à sec (29a, 29b).

5. Dispositif selon l'une quelconque des revendications précédentes, caractérisé en ce que l'enceinte cylindrique comporte une enveloppe (1) en caoutchouc et des extrémités constituées par des plateaux (7, 8) rigides qui adhèrent à l'enveloppe après vulcanisation.

6. Dispositif selon la revendication 5, caractérisé en ce que les plateaux (7,8) comportant des collerettes internes (9,11) appliquées contre les parois internes des extrémités (3,4) de l'enveloppe (1) et des anneaux de blocage (12,13( sont noyés dans ces extrémités (3,4) en regard des collerettes (9,11).

0256949

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,P | FR-A-2 577 653 (PRONAL S.A.) <br> * Abrégé; figures * | 1,5 | F 16 L 55/12 |
| A | CH-A- 201 377 (K. KÖNIG) <br> * Page 1, colonne 2, ligne 4 - page 2, colonne 1, ligne 38; figure * | 1,3 | |
| A | GB-A-2 140 528 (B. SHAKESPEARE) | | |

DOMAINES TECHNIQUES
RECHERCHES (Int. Cl.4)

F 16 L
F 16 K

Le présent rapport de recherche a été établi pour toutes les revendications

| Lieu de la recherche | Date d'achèvement de la recherche | Examinateur |
|---|---|---|
| LA HAYE | 04-11-1987 | BARTSCH A.W. |